# EUROPÄISCHE PATENTSCHRIFT

(11) **EP 0 778 434 B1**
(45) Veröffentlichungstag und Bekanntmachung des Hinweises auf die Patenterteilung: **30.09.1998**
(21) Anmeldenummer: 96118556.8
(22) Anmeldetag: 20.11.1996
(51) Int. Cl.: F16K 35/02

(54) **Stellgriff**
Handle
Poignée

(30) Priorität: 07.12.1995 DE 19545587
(43) Veröffentlichungstag der Anmeldung: 11.06.1997
(73) Patentinhaber: FRIEDRICH GROHE AKTIENGESELLSCHAFT, D-58675 Hemer (DE)
(72) Erfinder: Gottwald, Adolf, 58638 Iserlohn (DE); Köster, Wilfried, 58710 Menden (DE)

(56) Entgegenhaltungen:
- DE-A- 4 308 762
- DE-U- 9 209 111
- FR-A- 1 514 245
- GB-A- 931 202
- GB-A- 2 133 511
- NL-A- 7 301 756
- US-A- 3 693 874
- US-A- 4 577 831

## Beschreibung

Die Erfindung betrifft einen Stellgriff für Wasserventil, insbesondere für Sanitärräume, Küchen etc., wobei der Stellgriff an einer aus einem Ventilgehäuse axial festliegend herausgeführten, begrenzt drehbaren Ventilspindel drehfest angeordnet ist, und an dem Ventil ein vom Benutzer lösbarer Drehanschlag für den Stellgriff vorgesehen ist.
Ein derartiger Stellgriff ist aus der deutschen Offenlegungsschrift DE 43 08 762 A1 bekannt. Hierbei ist in einem separaten Anschlaggehäuse der Anschlag angeordnet und mit einer am Außenbereich des Anschlaggehäuses vorstehenden Betätigungstaste lösbar.

Der Erfindung liegt die Aufgabe zugrunde, einen Stellgriff mit einer vom Benutzer lösbaren Anschlagausbildung ohne eine besondere Betätigungstaste zu schaffen.

Diese Aufgabe wird erfindungsgemäß dadurch gelöst, daß der Stellgriff auf der Ventilspindel begrenzt axial verschiebbar angeordnet ist und wenigstens einen axialen Vorsprung aufweist, der mit einem oder mehreren Anschlägen am Ventilgehäuse zusammenwirkt, derart, daß der axiale Vorsprung des Stellgriffs in der einen axialen Endstellung an dem oder den Anschlägen vorbei drehbar ist.
Weitere Ausgestaltungen der Erfindung sind in den Ansprüchen 2 bis 15 angegeben.

Mit den vorgeschlagenen Maßnahmen wird mit einfachen Mitteln erreicht, daß durch ein axiales Verschieben oder "Liften" des Stellgriffs die Anschlagausbildung lösbar ist und auf einer zweiten Bedienungsebene eine weitere Einstellung ermöglicht wird. Bei einem Wassermischventil kann auf der zweiten Bedienungsebene vorzugsweise die Heißwassertemperatur eingestellt werden, wobei der lösbare Anschlag als Verbrühungsschutz wirkt und verhindert, daß unbeabsichtigt eine Heißwassertemperatur eingestellt wird. Bei einem Wassermengenregulierventil kann durch die lösbare Anschlagausbildung die Wasserdurchflußmenge pro Zeiteinheit gestuft eingestellt werden, so daß in einem ersten Drehbereich ohne Axialverschiebung nur eine reduzierte Wassermenge pro Zeiteinheit abgegeben werden kann. Bei einem Absperr- und Umschaltventil für die eine alternative Wasserzuleitung zu einer Brause oder einer Badewanne kann als zweckmäßig die lösbare Anschlagausbildung in der Absperrposition angeordnet werden, so daß dann in der ersten Bedienungsebene durch ein Wegdrehen des Stellgriffs von der Anschlagausbildung zunehmend der Wasserzufluß zur Badewanne geleitet wird, während in der zweiten Bedienungsebene nach der Axialverschiebung in der entgegengesetzten Drehrichtung zunehmend der Wasserzufluß zur Brause freigegeben wird.

Ein Ausführungsbeispiel der Erfindung ist in der Zeichnung dargestellt und wird im folgenden näher beschrieben. Es zeigt
- Figur 1: einen an einem Armaturenkörper angeordneten Stellgriff in einer ersten Axialposition, teilweise geschnitten;
- Figur 2: den in Figur 1 gezeigten Stellgriff in der Schnittebene II;
- Figur 3: den in Figur 1 dargestellten Stellgriff in seiner zweiten Axialposition;
- Figur 4: den in Figur 3 dargestellten Stellgriff in der Schnittebene IV;
- Figur 5: den in Figur 1 dargestellten Stellgriff um 90° gedreht in Seitenansicht.

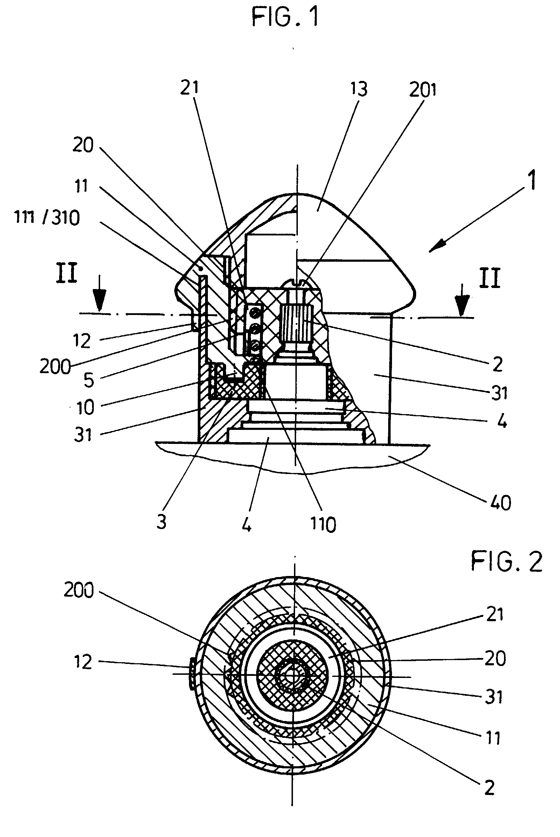

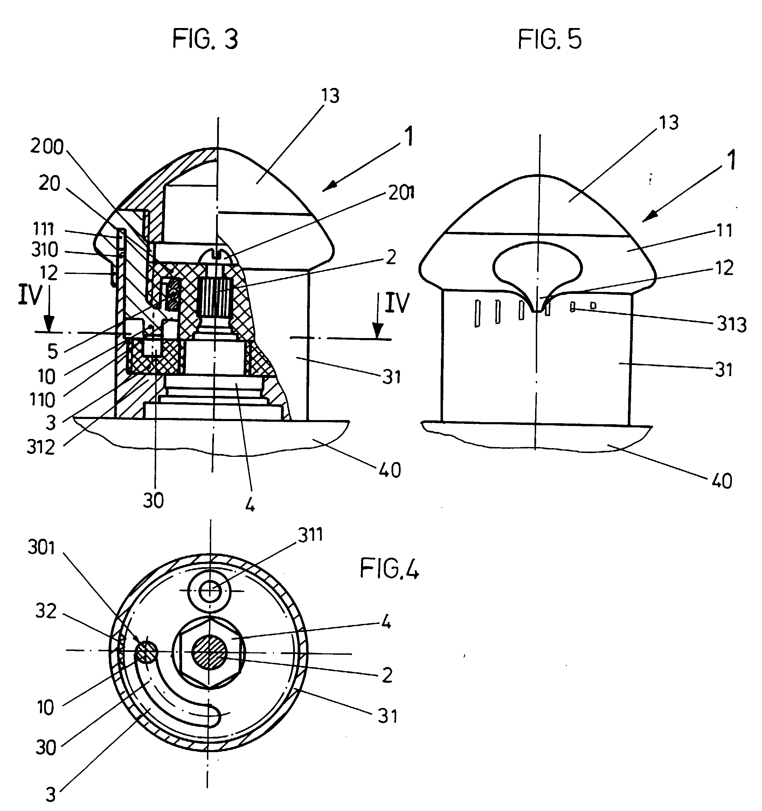

Der in der Zeichnung dargestellte Stellgriff 1 ist an einer Ventilspindel 2 mit einer Führungsbuchse 20 drehfest verbunden. Die Ventilspindel 2 ist nicht steigend ausgebildet und in einem Ventilgehäuse 4, welches in einem Armaturenkörper 40 befestigt ist, drehbar gelagert. Die Führungsbuchse 20 ist mittels Verzahnung drehfest auf der Ventilspindel 2 angeordnet und mit einer Schraube 201 axial in der Stecklage gesichert. In der Führungsbuchse 20 ist eine ringförmige Ausnehmung 21 ausgebildet, in der eine Feder 5 angeordnet ist. An der Außenmantelfläche der Führungsbuchse 20 ist eine Verzahnung 200 ausgebildet, auf der eine Griffhülse 11 mit einer entsprechenden Verzahnung 200 axial begrenzt verschiebbar angeordnet ist. Koaxial zu dem Ventilgehäuse 4 ist an dem Armaturenkörper 40 ein feststehendes Griffgehäuse 31 mit einer zylindrischen Außenmantelfläche angeordnet und mit Befestigungsschrauben 311 am Armaturenkörper 40 verspannt. Das Griffgehäuse 31 ist dabei mit einem rohrförmig vorstehenden Ansatz 310 versehen, der in eine entsprechende Ringnut 111 der Griffhülse 11 einfaßt. In dem Griffgehäuse 31 ist eine Aufnahme für einen Anschlagring 3 ausgebildet. Der Anschlagring 3 liegt dabei in seiner Stecklage an einer Schulter 312 des Griffgehäuses 31 an und ist am Außenmantel mittels Verzahnung 32 drehfest mit dem Griffgehäuse 31 verbunden.
In dem Anschlagring 3 ist ein Ringnutbogenstück 30 ausgebildet, wie es insbesondere aus Figur 4 zu entnehmen ist. An der Griffhülse 11 ist stirnseitig ein Vorsprung 10 als zylindrischer Zapfen ausgebildet, der in der in Figur 1 gezeigten Axialstellung der Griffhülse 11 in das Ringnutbogenstück 30 einfaßt. Die in der Ausnehmung 21 angeordnete Feder 5 stützt sich hierbei einerseits im Grund der Ausnehmung 21 und andererseits an einem Innenflansch 110 der Griffhülse 11 ab, so daß die Griffhülse 11 mit dem Vorsprung 10 in Richtung auf den Anschlagring 3 gedrückt wird. An der äußeren Stirnseite ist die Griffhülse 11 mit einer Kappe 13 verschlossen. Außerdem ist am Außenmantel der Griffhülse 11 ein Zeiger 12 angeformt, der mit einer Skala 313 und/oder Piktogrammen am Außenmantel des Griffgehäuses 31 zusammenwirkt. Die axiale Verschiebung der Griffhülse 11 von der ersten in die zweite Bedienungsebene beträgt etwa 1 mm bis 10 mm, vorzugsweise 3 mm.

Der Stellgriff hat folgende Funktionsweise:
Der in Figur 1 gezeigte Stellgriff 1 befindet sich in einer ersten Bedienungsebene, wobei sich der Stellgriff 1 axial in einer dem Armaturenkörper 40 zugekehrten Endposition befindet. Hierbei greift der Vorsprung 10 in das Ringnutbogenstück 30, wie es in Figur 4 gezeigt ist, ein. Der Stellgriff 1 kann somit in dieser Bedienungsebene im Bereich des Ringnutbogenstückes 30 gedreht werden. Am Endbereich des Ringnutbogenstückes 30 ist die Stirnseite als Anschlag 301 ausgebildet. Soll der Stellgriff 1 weiter im Uhrzeigersinn gedreht werden, so ist es erforderlich, die Griffhülse 11 entgegen der Kraft der Feder 5 axial zu verschieben, so daß der Vorsprung 10 nicht mehr in das Ringnutbogenstück 30 eingreift. In dieser Axialstellung befindet sich der Stellgriff 1 in der zweiten Bedienungsebene, so daß er nunmehr bis zum Endanschlag im Uhrzeigersinn weitergedreht werden kann. Hierbei kann die Stirnseite des Vorsprungs 10 auf der Oberfläche des Anschlagrings 3 gleitend anliegen. Wird das Griffstück 1 aus der zweiten Bedienungsebene entgegen dem Uhrzeigersinn zurückgedreht, so drückt die Feder 5 die Griffhülse 11, nachdem der Vorsprung 10 wiederum den Bereich des Ringnutbogenstücks 30 erreicht hat, in die erste Bedienungsebene zurück, d. h. die Griffhülse 11 wird axial in Richtung auf den Armaturenkörper 40 in die erste Bedienungsebene zurückgeschoben.

In dem vorstehend beschriebenen Ausführungsbeispiel ist der Vorsprung 10 als zylindrischer Zapfen ausgebildet, der mit einem Ringnutbogenstück 30 zusammenwirkt. Selbstverständlich kann der Vorsprung auch als eine Radialrippe ausgebildet sein, die mit einem entsprechenden Ringausschnitt in dem Anschlagring zusammenwirkt. Auch ist bei dem Ausführungsbeispiel der Anschlag 301 senkrecht zur Drehrichtung ausgebildet, so. daß diese Anschlagausbildung selbsthemmend wirkt, und ein Überwinden des Anschlags 301 allein durch eine axiale Auslenkung des Griffstücks 1 erzielt werden kann. Alternativ kann selbstverständlich auch die Fläche des Anschlags 301 geneigt zur Drehrichtung angeordnet werden, derart, daß nach der Anlage des Vorsprungs am Anschlag 301 durch Einleiten eines erhöhten Drehmoments in den Stellgriff 1 eine selbsttätige axiale Auslenkung erfolgt und somit ein vom Benutzer besonders eingeleitetes axiales Verschieben des Stellgriffs 1 unterbleiben kann.
Außerdem ist bei dem vorstehenden Ausführungsbeispiel der Anschlagring 3 am Außenmantel mit einer Verzahnung 32 drehfest mit dem Griffgehäuse 31 verbunden. Die Verzahnung ist hierbei so ausgelegt, daß zur Änderung der Position des Anschlags 301 diese feingestuft in verschiedenen Drehstellungen in das Griffgehäuse 31 eingesetzt werden kann. Alternativ kann selbstverständlich aber auch der Anschlagring 3 auf dem Ventilgehäuse 4 mittels einer fein gestuften Verzahnung drehfest gehalten werden.

Das vorstehend beschriebene Ausführungsbeispiel des Stellgriffs 1 kann an einem Mengenregulierventil, bei dem die Ventilspindel 2 mit einem Drehschieber oder einem axial verschiebbaren Ventilverschlußglied verbunden ist, eingesetzt werden. In gleichem Maße kann der Stellgriff 1 auch bei einem Wassermischventil, insbesondere thermostatgeregeltem Mischventil, eingesetzt werden, wobei die Ventilspindel 2 dann mit einem entsprechenden Stellglied verbunden ist. Schließlich kann auch der Stellgriff 1 an einem Absperr- und Umschaltventil, vorzugsweise zur Wasserzuflußsteuerung, angeordnet werden, wobei in der Anschlagposition des Stellgriffs 1 das Ventil sich in Absperrstellung befindet. Wird in dieser ersten Bedienungsebene der Drehgriff von dem Anschlag 301 weggedreht, so wird zunehmend der Wasserzufluß zu einer Badewanne freigegeben. Wird der Stellgriff 1 dagegen in der Anschlagposition axial in die äußere Endposition bewegt und in dieser Stellung über den Anschlag hinweggedreht, so wird zunehmend der Wasserzufluß zur Brause freigegeben.

## Patentansprüche

1. Stellgriff für ein Wasserventil, insbesondere für Sanitärräume, Küchen etc., wobei der Stellgriff (1) an einer aus einem Ventilgehäuse (4) axial festliegend herausgeführten, begrenzt drehbaren Ventilspindel (2) drehfest angeordnet ist, und an dem Ventil ein vom Benutzer lösbarer Drehanschlag für den Stellgriff (1) vorgesehen ist, dadurch gekennzeichnet, daß der Stellgriff (1) auf der Ventilspindel (2) begrenzt axial verschiebbar angeordnet ist und wenigstens einen axialen Vorsprung (10) aufweist, der mit einem oder mehreren Anschlägen (301) am Ventilgehäuse (4,40) zusammenwirkt, derart, daß der axiale Vorsprung (10) des Stellgriffs (1) in der einen axialen Endstellung an dem oder den Anschlägen (301) vorbeidrehbar ist.

2. Stellgriff nach Anspruch 1, dadurch gekennzeichnet, daß der Stellgriff (1) von der Schwerkraft und/oder von einer Feder (5) in die axiale Endstellung gedrückt ist, in der der Vorsprung (10) mit dem oder den Anschlägen (301) zusammenwirkt und eine Drehwinkelbegrenzung erfolgt.

3. Stellgriff nach Anspruch 1 oder 2, dadurch gekennzeichnet, daß an dem Ventilgehäuse (4,40) ein Anschlagring (3) mit einem dem eingeschränkten Drehwinkel entsprechenden Ringnutbogenstück (30) drehfest angeordnet ist, wobei an dem Stellgriff (1) als Vorsprung (10) ein Zapfen ausgebildet ist, der in der einen Axialstellung des Stellgriffs (1) in das Ringnutbogenstück (30) einfaßt und den Drehwinkel entsprechend begrenzt.

4. Stellgriff nach Anspruch 1 oder 2, dadurch gekennzeichnet, daß an dem Ventilgehäuse (4,40) ein Anschlagring (3) mit einem dem Stellgriff (1) zugekehrten Ringausschnitt vorgesehen ist, wobei an dem Stellgriff (1) als Vorsprung (10) eine entsprechende Radialrippe angeformt ist, so daß in der einen Axialstellung der Stellgriff (1) mit der Radialrippe in den Ringausschnitt einfaßt und den Drehwinkel entsprechend begrenzt.

5. Stellgriff nach wenigstens einem der Ansprüche 1 bis 4, dadurch gekennzeichnet, daß er aus einer stigten Führungsbuchse (20) und eine äußere, auf der Führungsbuchse (20) drehfest und axial begrenzt verschiebbaren Griffhülse (11) mit dem Vorsprung (10) besteht, wobei in der Führungsbuchse (20) eine ringförmige Ausnehmung (21) für die Aufnahme der Feder (5) vorgesehen ist, die sich einerseits im Grund der Ausnehmung (21) und andererseits an einem die axiale Verschiebung begrenzenden Innenflansch (110) der Griffhülse (11) abstützt, so daß die Griffhülse (11) mit einer bestimmten Kraft axial gegen einen Anschlagring (3) gedrückt wird.

6. Stellgriff nach Anspruch 5, dadurch gekennzeichnet, daß die Griffhülse (11) eine umlaufende Ringnut (111) aufweist, in die ein feststehendes, den Anschlagring (3) aufnehmendes Griffgehäuse (31) mit einem rohrförmigen Ansatz (310) einfaßt, wobei in beiden Axialstellungen der Griffhülse (11) der Ansatz (310) in die Ringnut (111) eingreift.

7. Stellgriff nach Anspruch 6, dadurch gekennzeichnet, daß die Griffhülse (11) am Außenmantel einen Zeiger (12) oder eine Marke hat, der/die mit einer Skala (313) und/oder Piktogrammen auf dem Außenmantel des Griffgehäuses (31) zusammenwirkt.

8. Stellgriff nach Anspruch 6 oder 7, dadurch gekennzeichnet, daß das Griffgehäuse (31) zusammen mit dem Anschlagring (3) mittels einer oder mehrerer Befestigungsschrauben (311) am Ventilgehäuse (4) oder einem Armaturenkörper (40) befestigt ist.

9. Stellgriff nach wenigstens einem der Ansprüche 5 bis 8, dadurch gekennzeichnet, daß die Griffhülse (11) mittels Verzahnung (200) drehfest mit der Führungsbuchse (20) verbunden ist.

10. Stellgriff nach wenigstens einem der Ansprüche 1 bis 9, dadurch gekennzeichnet, daß wenigstens ein Anschlag (301) und/oder Vorsprung (10) in Drehrichtung geneigt ausgebildet ist, derart, daß bei einer Anlage des Stellgriffs (1) am Anschlag (301) nach einer Erhöhung des aufgebrachten Drehmoments dieser selbsttätig axial ausgelenkt und damit der Anschlag (301) freigegeben wird.

11. Stellgriff nach wenigstens einem der Ansprüche 1 bis 10, dadurch gekennzeichnet, daß die axiale Verschiebung des Stellgriff (1) von einer ersten Bedienungsebene in eine zweite Bedienungsebene etwa 1 mm bis 10 mm, vorzugsweise 3 mm beträgt.

12. Stellgriff nach wenigstens einem der Ansprüche 1 bis 11, dadurch gekennzeichnet, daß er für die Betätigung eines Mengenregulierventils eingesetzt ist.

13. Stellgriff nach wenigstens einem der Ansprüche 1 bis 11, dadurch gekennzeichnet, daß er an einem Mischventil, vorzugsweise an einem thermostatgeregelten Mischventil, zur Einstellung der Temperatur des Mischfluids eingesetzt ist.

14. Stellgriff nach wenigstens einem der Ansprüche 1 bis 11, dadurch gekennzeichnet, daß er an einem Umschaltventil mit Durchflußmengensteuerung eingesetzt ist, wobei die Anschlagausbildung in der Absperrstellung zur Anlage gelangt.

15. Stellgriff nach Anspruch 14, dadurch gekennzeichnet, daß mit dem Umschaltventil ein Wasserzufluß wahlweise zu einer Dusche oder einer Badewanne leitbar ist, wobei durch ein Wegdrehen des Stellgriffs (1) von seiner Anschlaglage der Wasserzufluß zur Badewanne zunehmend freigegeben wird, während der Wasserzufluß für die Brause nach einer Axialverschiebung in der Anschlagposition in entgegengesetzter Drehrichtung zunehmend freigegeben. wird.

## Claims

1. Control knob for a water valve, especially for washrooms, kitchens etc., the control knob (1) being arranged non-rotatably on a valve stem (2), which projects out of a valve housing (4) and is axially fixed but capable of limited rotation, there being provided on the valve a rotation stop for the control knob (1), which rotation stop is releasable by the user, characterised in that the control knob (1) is arranged to be capable of limited axial displacement on the valve stem (2) and has at least one axial projection (10), which cooperates with one or more stops (301) on the valve housing (4, 40) in such a manner that, in one of the axial end positions, the axial projection (10) of the control knob (1) can be rotated past the stop(s) (301).

2. Control knob according to claim 1, characterised in that the control knob (1) is urged by gravity and/or by a spring (5) into the axial end position in which the projection (10) cooperates with the stop(s) (301) and the angle of rotation is restricted.

3. Control knob according to claim 1 or 2, characterised in that there is arranged non-rotatably on the valve housing (4, 40) a stop ring (3) having an arcuate portion (30) corresponding to the restricted angle of rotation, with a peg being constructed as the projection (10) on the control knob (1), which peg engages in the arcuate groove portion (30) when the control knob (1) is in one of the axial positions and restricts the angle of rotation accordingly.

4. Control knob according to claim 1 or 2, characterised in that there is provided on the valve housing (4, 40) a stop ring (3) having an arcuate cut-out facing towards the control knob (1), and a corresponding radial rib is formed on the control knob (1) as the projection (10) so that, in one of the axial positions, the radial rib of the control knob (1) engages in the arcuate cut-out and restricts the angle of rotation accordingly.

5. Control knob according to at least one of claims 1 to 4, characterised in that it consists of a guide bush (20), which is axially and non-rotatably fixed on the valve stem (2), and an outer knob sleeve (11) having the projection (10), which knob sleeve (11) is capable of limited axial displacement on the guide bush (20) but not of rotation thereon, with an annular recess (21) being provided in the guide bush (20) for accommodating the spring (5), which is supported, on the one hand, on the base of the recess (21) and, on the other hand, against an inner flange (110) of the knob sleeve (11), which inner flange (110) limits axial displacement, so that the knob sleeve (11) is urged axially against a stop ring (3) with a definite force.

6. Control knob according to claim 5, characterised in that the knob sleeve (11) has a peripheral annular groove (111), in which a fixed knob housing (31) accommodating the stop ring (3) engages by means of a tubular extension (310), the extension (310) engaging in the annular groove (111) in both axial positions of the knob sleeve (11).

7. Control knob according to claim 6, characterised in that the outer surface of the knob sleeve (11) has a pointer (12) or a mark, which cooperates with a scale (313) and/or pictograms on the outer surface of the knob housing (31).

8. Control knob according to claim 6 or 7, characterised in that the knob housing (31), together with the stop ring (3), is fastened, by means of one or more fastening screws (311), to the valve housing (4) or to a fitment body (40).

9. Control knob according to at least one of claims 5 to 8, characterised in that the knob sleeve (11) is connected non-rotatably to the guide bush (20) by means of a tooth arrangement (200).

10. Control knob according to at least one of claims 1 to 9, characterised in that at least one stop (301) and/or projection (10) is constructed to be inclined in the direction of rotation in such a manner that once the control knob (1) is in contact with the stop (301) axial excursion thereof occurs automatically and consequently the stop (301) is freed, when the applied torque is increased.

11. Control knob according to at least one of claims 1 to 10, characterised in that the axial displacement of the control knob (1) from a first operating plane to a second operating plane is approximately from 1 mm to 10 mm, preferably 3 mm.

12. Control knob according to at least one of claims 1 to 11, characterised in that it is used for operating a flow-regulating valve.

13. Control knob according to at least one of claims 1 to 11, characterised in that it is used on a mixing valve, preferably a thermostatically regulated mixing valve, for adjusting the temperature of the mixed fluid.

14. Control knob according to at least one of claims 1 to 11, characterised in that it is used on a switch-over valve having flow amount control, contact being made with the stop arrangement in the shut-off position.

15. Control knob according to claim 14, characterised in that, using the switch-over valve, it is possible to direct an inflow of water optionally to a shower or a bath tub, the inflow,of water to the bath tub becoming increasingly unrestricted by rotating the control knob (1) away from its stop position whereas, after axial displacement in the stop position, the inflow of water for the shower becomes increasingly unrestricted in an opposite direction of rotation.

## Revendications

1. Poignée de réglage d'un robinet d'eau utilisé en particulier dans les sanitaires, les cuisines etc.., cette poignée (1) étant montée solidaire en rotation sur une tige de robinet (2) à rotation limitée, dépassant axialement d'un boîtier de robinet, cette poignée étant associée à une butée de rotation portée par le robinet et dont peut la libérer l'utilisateur,
caractérisée en ce que
la poignée de réglage (1) est montée sur la tige de robinet (2) avec coulissement axial limité et présente au moins une saillie axiale (10) coopérant avec une ou plusieurs butées (301) situées sur le boîtier de robinet (4, 40) de sorte que la saillie axiale (10) de la poignée de réglage (1), dans une position axiale extrême, peut passer sur la ou les butées (301).

2. Poignée de réglage selon la revendication 1,
caractérisée en ce que
la poignée (1) est poussée par la gravité et/ou par un ressort (5) vers la position axiale extrême dans laquelle la saillie (10) coopère avec la ou les butées (301) et crée une limitation de l'angle de rotation.

3. Poignées de réglage selon la revendication 1 ou 2,
caractérisée en ce que
sur le boîtier de robinet (4, 40) est prévue une bague de butée (3) solidaire en rotation avec une pièce à segment annulaire (30) correspondant à la limitation de l'angle de rotation, tandis que la poignée de réglage (1) présente un téton en saillie (10) qui, dans une position axiale de la poignée (1) est en prise dans la pièce à segment annulaire (30) et limite corrélativement l'angle de rotation.

4. Poignée de réglage selon la revendication 1 ou 2,
caractérisée en ce que
sur le boîtier de robinet (4, 40) est prévue une bague de butée (3) portant une découpe annulaire faisant face à la poignée (1) qui elle même porte une nervure radiale formant saillie (10), de sorte que dans une position axiale la poignée de réglage (1) est en prise par sa nervure radiale dans la partie de la bague avec limitation en conséquence de l'angle de rotation.

5. Poignée de réglage selon au moins une des revendications 1 à 4,
caractérisée en ce que
la poignée est constituée d'une douille de guidage (20) montée axialement solidaire en rotation sur la tige de robinet (2) et d'une douille externe de prise portant la saillie (10) et montée sur la douille (20) fixe en rotation et pouvant coulisser limitée axialement, un évidement annulaire (21) étant prévu dans la douille de guidage (20) pour recevoir le ressort (5) qui s'appuie d'un côté sur le fond de l'évidement (21) et de l'autre sur une bride interne (110) appartenant à la douille de prise et limitant le coulissement axial, de sorte que la douille de manoeuvre (11) est appliquée axialement par une force définie, sur une bague de butée (3).

6. Poignée de réglage selon la revendication 5,
caractérisée en ce que
la douille de prise (11) porte une gorge annulaire périphérique (111) dans laquelle est en prise par un appendice tubulaire (310) un boîtier de poignée (31) fixe servant de logement à la bague de butée (3), l'appendice (310) étant en prise dans la rainure (111) dans les deux positions axiales de la douille (11).

7. Poignée de réglage selon la revendication 6,
caractérisée en ce que
la douille de prise (11) porte à sa surface externe un index (12) ou un marquage coopérant avec une échelle (313) et/ou des pictogrammes portés par la surface externe.

8. Poignée de réglage selon la revendication 6 ou 7,
caractérisée en ce que
le boîtier de poignée (31) ainsi que la bague de butée (3) sont fixés ensemble par une ou plusieurs vis (311) au boîtier de robinet (4) ou à un corps de robinet (40).

9. Poignée de réglage selon au moins une des revendications 5 à 8,
caractérisée en ce que
la douille de manoeuvre (11) est solidaire en rotation de la douille de guidage (20) par l'intermédiaire d'une denture (200).

10. Poignée de réglage selon au moins une des revendications 1 à 9,
caractérisée en ce qu'
au moins une butée (301) et/ou une saillie (10) est inclinée dans le sens de rotation de manière que lorsque la poignée de réglage (1) vient en appui sur la butée (301), cette poignée, après une certaine augmentation du couple appliqué, est automatiquement déplacée axialement et se trouve ainsi libérée de la butée (301).

11. Poignée de réglage selon au moins l'une des revendications 1 à 10,
caractérisée en ce que
le coulissement axial de la poignée de manoeuvre (1) la fait passer d'un premier plan de service à un second plan de service distant du premier de 1 à 10 mm, de préférence 3 mm.

12. Poignée de réglage selon au moins une des revendications 1 à 11,
caractérisée en ce qu'
elle est utilisée pour actionner un robinet de réglage de débit.

13. Poignée de réglage selon au moins une des revendications 1 à 11,
caractérisée en ce qu'
elle est utilisée sur un robinet mitigeur de préférence à thermorégulation pour régler la température du liquide mélangé.

14. Poignée de réglage selon au moins une des revendications 1 à 11,
caractérisée en ce qu'
elle est utilisée sur un robinet de commutation avec commande de débit, le système à butée venant en appui en position d'arrêt.

15. Poignée de réglage selon la revendication 14,
caractérisée en ce que
le robinet de commutation permet d'alimenter en eau au choix une douche ou une baignoire, une rotation de la poignée de réglage (1) à partir de sa position de butée assurant une arrivée d'eau, avec débit croissant, à la baignoire, tandis que l'amenée d'eau à la douche est obtenue après un coulissement axial effectué dans la position de butée, par rotation dans l'autre sens, le débit croissant avec cette rotation.
